(19) Europäisches Patentamt
European Patent Office
Office européen des brevets

(11) Publication number : **0 609 638 A1**

(12) **EUROPEAN PATENT APPLICATION**

(21) Application number : **93600016.5**

(51) Int. Cl.$^5$ : **A01N 25/10**, C08F 218/12

(22) Date of filing : **24.09.93**

(30) Priority : **27.10.92 GR 92010479**

(43) Date of publication of application : **10.08.94 Bulletin 94/32**

(84) Designated Contracting States : **BE DE FR IT**

(71) Applicant : **Tsatsakis, Aristidis**
**Ag. Fanouriou 1,**
**Alikarnassos**
**GR-71408 Alikarnassos, Iraklion (GR)**

(71) Applicant : **Vlachakis, Eleuterios Ioanis**
**Mirionou 1**
**GR-71202 Iraklio (GR)**

(71) Applicant : **Shtilman, Isaak Michail**
**Gohtvald 20,**
**Apart. 51**
**Moscow 125047 (RU)**

(71) Applicant : **Shashkova, Michail Irina**
**Novomitihinski,**
**45 Aven. 1, Apart. 166**
**GR-71202 Iraklio (GR)**

(71) Applicant : **ALLAKHVERDIEV SURKHAI RAGIM INSTITUTE OF BOTANY ACADEMY OF SCIENCES OF AZERBAIJAN**
**Ratamdartskoe Shosse 40**
**Baku, 370073 (AZ)**

(72) Inventor : **Tsatsakis, Aristidis**
**Ag. Fanouriou 1,**
**Alikarnassos**
**GR-71408 Alikarnassos, Iraklion (GR)**
Inventor : **Vlachakis, Eleuterios Ioanis**
**Mirionou 1**
**GR-71202 Iraklio (GR)**
Inventor : **Shtilman, Isaak Michail**
**Gohtvald 20,**
**Apart. 51**
**Moscow 125047 (RU)**
Inventor : **Shashkova, Michail Irina**
**Novomitihinski,**
**45 Aven. 1, Apart. 166**
**GR-71202 Iraklio (GR)**
Inventor : **ALLAKHVERDIEV SURKHAI RAGIM INSTITUTE OF BOTANY ACADEMY OF SCIENCES OF AZERBAIJAN**
**Ratamdartskoe Shosse 40**
**Baku, 370073 (AZ)**

(74) Representative : **Ramoutsakis, George**
**Zografou 7**
**GR-712 01 Iraklion (GR)**

(54) **Water soluble polymeric systems of phytohormones with slow release: synthesis and application.**

(57) Our discovery concerns the method of synthesis and the application of new chemical products for plant growing. These new products are polymeric derivatives of low molecular weight plant growth regulators and are characterized by slow release of the auxin from the polymeric carrier. By copolymerisation of allylic esters of the low molecular weight auxins with the acrylic (or the methylacrylic) acid and the following modification of the synthesized co-polymers of acids to their corresponding ammonium salts, water soluble polymeric auxins possesing optimal molecular weight and desirable (high) content of the low molecular weight auxin in the polymer were prepared. The method of synthesis and the final products fulfill the requirements of the preparation technology and of their application respectively. We suggest the application of the new products in agronomy (i.e. treatment of seeds, rootstocks, plants, scions, cutting etc) either by themselves or by combination of them with other chemicals. The chemical structure of the new products we discover is :

EP 0 609 638 A1

```
-[-(-CH2-CH-)n-(-CH2-CR)m-]x-
          |              |
          CH             COO-
          |                 NH4+
          O-CO-Au
```

R = H-, -CH3, Au = auxin residue

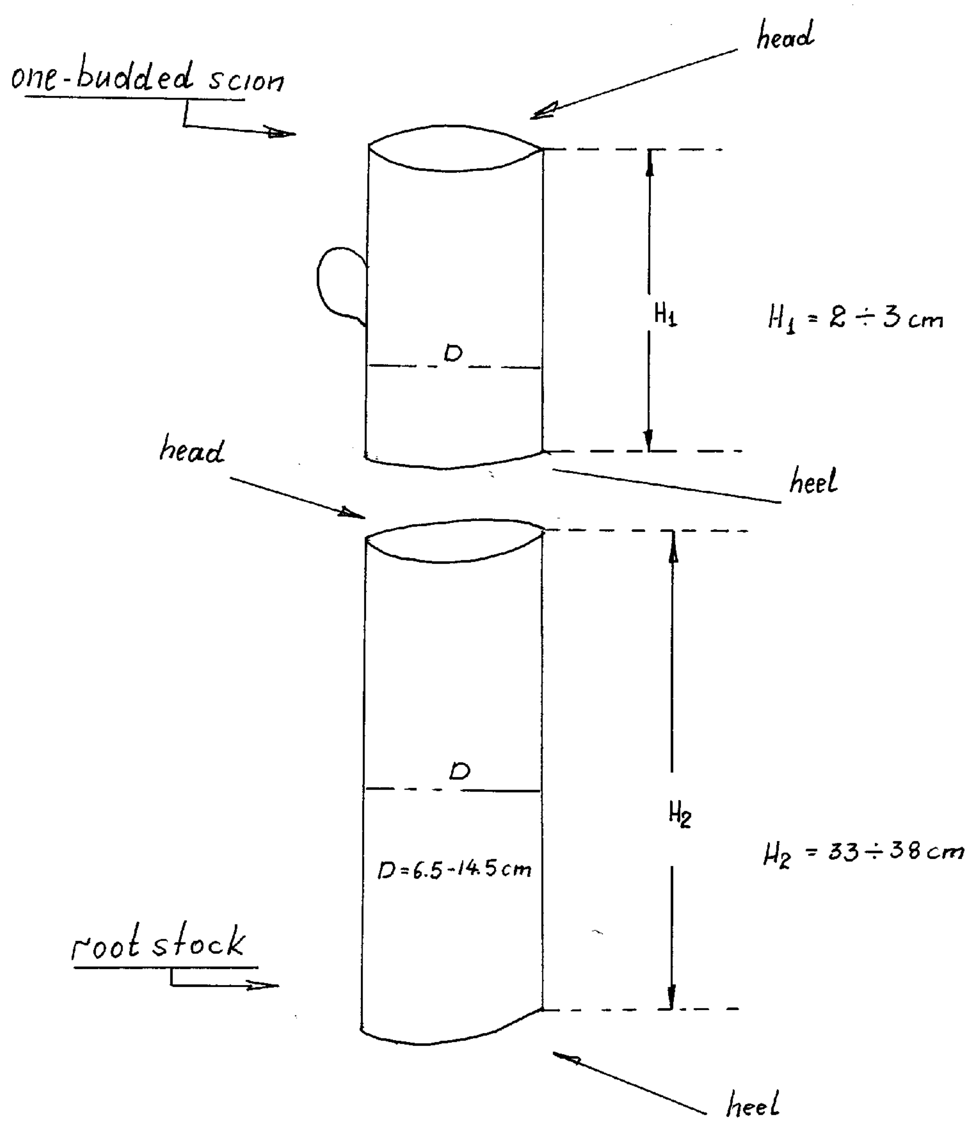


Scheme 1

Our discovery concerns the synthesis and application of new biologically active agrochemicals for the regulation of plant growth. These new chemical substances are polymeric derivatives of the low molecular weight plant growth regulators (PGRs) and are characterised by slow release of the biologically active ingredient (low molecular PGR) from the polymeric system.

A great number of PGRs of natural origin or their synthetic analogues is already known. Among them, the low molecular weight auxins, for example, induce callusing and rooting. As a rule, the low molecular weight auxins are characterised by a narrow region of stimulating concentrations and doses. If these concentrations or applied doses are exceeded, then plants rather than being stimulated may be inhibited even to the point of death (herbicidic effect). In addition, many PGRs, especially those of natural origin (i.e. β-indolylacetic acid, the heteroauxin) are biodegradable, and high doses are required to achieve the desired effect.

On the other hand, polymeric PGRs (i.e. PGRs chemically bonded to polymers) are also known in the scientific literature. Such modified PGRs display certain advantages in comparison to the simple (low molecular weight) PGRs. For example they are characterised by a wide region of stimulating concentrations, by controlled release of active component and so prolonged action, by desirable solubility and low toxicity to living organisms) [1,2,3,4].

More wide spread use of modified PGRs has been limited by a number of factors. Firstly, the preparation of these substances requires complex technology (i.e. effective synthetic methods for industrial preparation do not exist). Some of these substances are difficult to apply due to peculiarities in their biological and physical-chemical properties. The above, also concerns the polymeric auxins. Methods of synthesis of water soluble polymeric auxin derivatives have been described [3-11]. In general, the macromolecule of phytoactive polymer is a high molecular weight system in which the unit of bioactive compound (e.g. PGR) is attached to the polymeric chain by a hydrolysable chemical bond. In addition to the linkages with PGR units, the phytoactive polymers may contain other linkages in order to provide the polymeric system with the appropriate hydrophilicity (e.g. containing hydroxylic groups, amidic groups, pyrrolidonic groups). Most often homo- and copolymerisation of the unsaturated derivatives of the low molecular weight auxins with unsaturated monomers containing hydrophilic groups, or reaction of the low molecular weight regulators with reactionable polymeric carriers were used. According to the above, copolymers of haloidaroxyalkanecarboxylic acid vinyl esters with acrylamide were prepared, as well as, other polymeric auxins were prepared by reaction of auxin salts with the copolymer of acrylamide and vinyl-2-chloro-ethyl ether [4-6,8]. However the synthetic methods which are described in the literature possess the following disadvantages: The hydrophilic groups which the polymeric system contain did not always provide the desirable water solubility particularly for polymers with high content of bioactive compound of hydrophobic nature. It was remarked that when concentrations of bioactive ingredient (auxin) in polymers reaches values of 4-6 mol% (11-12 w/w) the polymer looses its water solubility. In other words, high quantities of polymeric forms with low content of bioactive compound should be applied. In addition vinyl-2-chloroethyl ether which was used in synthesis is not a convenient copolymerization agent as far acrylamide are not produced in large quantities by industry. The unsaturated auxin co-monomers that were used are unstable especially during their isolation and purification after synthesis (e.g. vinyl derivatives). Other unsaturated co-monomers were prepared by complex technological methods (e.g. including the use of chloroanhydrides or carbodiimides as in case of hydroxyalkyl acrylate or methacrylate derivatives).

Finally the previous synthetic methods did not result to polymeric auxins with the optimal molecular weight (MW), the value of which should be quite high to provide to the product the desirable polymeric effect (prolonged action etc). However, the molecular weight value should not be very high otherwise the purification of the final polymeric product from the admixture of bioactive co-monomer (auxin derivative which did not react ) is difficult. These admixtures possess negative influence to the biological properties of the final product. Besides, products purification demands long and expensive extraction procedures. In addition polymeric products with very high molecular weights and very high density are not convenient for treatment of plant and explant (e.g. preparation of a trade formulation from a resinous polymer product).

We discover a new synthetic method for the preparation of new polymeric derivatives of auxins that do not have the mentioned "disadvantages". An example of application in agronomy is also demonstrated. The new polymeric auxins we prepared are characterized by water solubility in high contents (up to 38.4 w/w) and quite high values of polymer molecular weight (not lower than 40-50 KDalton). They provide the desirable polymeric effect (e.g. prolonged action etc) and have relatively simple isolation and purification technology. Some examples of the polymeric auxins synthesis that has not been published earlier in the scientific and patent literature are given. The synthesis of the new products was achieved by co-polymerization of allylic esters of auxins with unsaturated carbonic acids (acrylic or methacrylic acid). The content of linkages with the auxin allylic ester in polymer system is 10-25 mol%. The prepared copolymers of the acids were modified to the corresponding water soluble ammonium salts.

The allylic esters that were used are esters of the following auxins : 3-indolylacetic acid, 3-indolylpropionic

acid, 3-indolylbutyric acid, 1-naphthylacetic acid, 2-naphthyloxyacetic acid, 2-naphthylthioacetic acid, 2,4-dichlorophenoxyacetic acid, 4-chlorophenoxyacetic acid, phenoxyacetic acid, 2-methyl-4-chlorophenoxyacetic acid, 2,4,5-trichlorophenoxyacetic acid, 2-(2,4-dichlorophenoxy)propionic acid, 2-(4-chlorophenoxy)propionic acid, 2-(2-methyl-4-chlorophenoxy)-propionic acid, 2-(2,4,5-trichlorophenoxy)propionic acid, 4-(2,4-dichlorophenoxy)butyric acid, 4-(4-chlorophenoxy)butyric acid, 4-(2-methyl-4-chlorophenoxy)butyric acid, 4-(2,4,5-trichlorophenoxy)butyric acid and other carbonic acids of the auxinic group.

The preparation of allylic esters was undertaken by esterification of the acids (auxins) with allylic alcohol in presence of p-toluenesulfonic acid as catalyst and aromatic or aliphatic hydrocarbon as solvent. The auxin allylic esters display several advantages over other unsaturated esters of auxin carbonic acids (e.g. vinyl and-alkyl-(methyl)-acrylic) since they are characterized by high chemical stability during their synthesis, isolation and purification procedures. In addition allylic esters are easily co-polymerized with unsaturated carbonic acids and the resulting copolymers were obtained in high yields with optimal molecular weights and with high content of bioactive compound (auxin).

The contents of bioactive compound in the polymer varied from 10 up to 25 mol% (or 20 w/w to 40 w/w) and are the desirable for applications. Allylic auxin esters were also prepared by reaction of auxin salts with allylic halogen-derivatives. As unsaturated carbonic acids for the co-polymerization except the mentioned acrylic and methacrylic acid (which are industrial products) other unsaturated acids as maleic acid, fumaric acid, itaconic and crotonic acid may be used.

The co-polymerisation of allylic esters with the unsaturated carbonic acids, was undertaken in solution in presence of radical polymerisation initiators. The reaction solvents (e.g. n-alkanes) dissolved the initial monomers while the produced copolymers were precipitated. Other solvents that dissolved both the initial monomers and the final copolymers were also utilized (e.g. alcohols, ketones, esters, cyclic ethers). In that case the copolymers were then precipitated by hydrocarbons. For the preparation of polymeric salts, ammonium or alkalic metal cations were used. The prepared new polymeric water soluble auxin derivatives are proposed to be used in different technologies of plant production such as treatment of seeds, cuttings and plants for induction of callusing and rooting etc. These products may be used also in mixtures with other chemicals for plant growing. Our discovery is illustrated in the following examples :

Example 1.

9.04 g (0.04 mole) of 1-naphthylacetic acid allylic ester, obtained by direct esterification of the acid with allyl alcohol (Reaction yield 93%; Boiling temperature of ester 143-145°C/2mm Hg UV-spectr, $\lambda$max = 282 nm ; $n_D$20=1.5846 ; $R_f$ = 0.58, heptane : acetone, silufol Merk), and 4.32 g (0.06 mole) of acrylic acid were copolymerized in presence of 0.16 g azodiisobutyronitrile (AIBN) in 37 g of heptane at 80°C for two hours. The yield of precipitated copolymer was 8.55 g (64%). The product displays maximum absorbance in UV region at 282 nm. Specific density [n] 0.81 g/dL. <MW> = 42.000. The content of bioactive compound in the polymer was found (according to UV measurements) to be 370 w/w (20.6 mol%). The copolymer was modified to water soluble form by neutralizing its dioxane (or alcohol) solution with a solution of ammonia in dioxane (or alcohol). The precipitated polymer is isolated and dried. The final polymer was water soluble. In standard biotests for stimulation of wheat coleoptile segment elongation the polymeric product displayed auxin like activity [12].

Example 2.

104.4 g (0.40 mole) of 2,4-dichlorophenoxyacetic acid allylic ester, obtained by direct esterification of the acid with allyl alcohol (Yield 91% ; Boiling temperature of ester 134-135 °C/2 mm Hg ; Melting temperature 24-25°C; $n_D$20 = 1.5395 ; $R_f$ = 0.59, chromatographic conditions as in example 1 ; UV-spectr, $\lambda$max = 284 nm), and 43.2 g (0.60 mole) of acrylic acid were copolymerized in presence of 1.64 g AIBN in 380 ml of heptane as a solvent, at 80 °C for two hours. The yield of precipitated copolymer was 98.9 g (67%) The content of bioactive compound according to UV measurement was 38.4 w/w (18.6 mol%). <MW> = 69.000. The prepared copolymer was modified to water soluble form, neutralizing its isopropanol solution with solution of ammonia in isopropanol. The precipitated polymer was isolated by centrifugation, and dried in vacuum. The polymeric salt display auxin activity [12].

Example 3.

6.45 g (0.03 mole) of 3-indolylacetic acid allylic ester, obtained by alkylation reaction of the acid with allyl bromide (The reaction yield was 75%; Boiling temperature 220-225 °C/2 mm Hg ; $n_D$20 = 1.5765 ; $R_f$ = 1.59, chromatographic conditions as in example 1; UV-spectr, $\lambda$max 281 nm) and 6.02 g (0.07 mole) methacrylic

acid were co - polymerized in presence of 0.33 g AIBN in 75 ml of heptane at 80 °C for two hours. The yield of precipitated copolymer was 8.48 g (68%). The content of bioactive compound (according to UV measurements) found to be 35.5 w/w (23.6 mol%) <MW> = 53000. The copolymer was modified to ammonium salt according to procedures of example 1. The final product is water soluble and displays auxin like biological activity in standard biotests [12].

Example 4.

7.26 g (0.03 mole) of 2-naphthoxyacetic acid allyl ester, obtained by direct esterification of the acid with allyl alcohol (Yield of ester 86% ; Boiling temperature of ester 175-180 °C/5 mm Hg ; $n_D20$ = 1.5870 ; $R_f$ = 0.51, chromatographic conditions as in example 1 ; UV-spectr, σmax 326 nm) and 5.0 g (0.07 mole) of acrylic acid were copolymerized in presence of 0.13 g AIBN in 70 ml heptane (as solvent) at 80 °C for two hours. The yield of precipitated copolymer was 6.87 g (56 %). The content of active compound 18.5 w/w (8.6 mol%) according to UV measurements. <MW> = 49000. The copolymer was modified to ammonium salt ( according to example 1) which displays auxin like biological activity (stimulation of coleoptile segment elongation).

Example 5.

The biological active polymeric derivative of 3-indolyl-butyric acid (ammonium salt of the copolymer of methacrylic acid and allyl ester of 3-indolylbutyric acid) was prepared according to example 3. The yield of the product was 42%. The content of active compound was 18 w/w.

Example 6.

The application of polymeric derivative of 2,4-dichloro-phenoxyacetic acid to the grafting of vine cuttings. The use of a water soluble polymeric form allows the separate incubation of the rootstocks and the graftings. It is possible to regulate the auxin concentration for the treatment of rootstocks (the callogenesis on the top (head) of the root-stocks). The grafting surface is free during the period of the quick reproduction of callus. The application of polymeric formulation costs less than that of parafin form (usually applied).

The scheme 1 presents the cuttings. The incubation in solution of polymeric form takes place after the procedure of subtraction of the buds from rootstocks. The grafting procedure is of type ω (omega). The procedure is successful if during thermostating of cuttings, the rootstocks produce callus on the head and the one budded scion on the heel. A five level scale was utilized for the estimation of callogenesis. The mechanical dipping of big quantities of cuttings accelerate the procedure of grafting.

The following tables illustrate the effectiveness of the new product and the possibility of alterating the procedures (using new, old and combined methods).

Table I

Evaluation of callus (C.E.) on grafted cuttings (rootstock R110, scion sultanina). The rootstocks were incubated in different concentrations of polymeric auxin (P.A.). Observations were done 35 days after thermostating of the cuttings at 27°C.

| Concentration P.A. / C.E. | Blank Sample | 5 ppm | 10 ppm | 20 ppm | Total |
|---|---|---|---|---|---|
| 0 | 11 | 8 | 4 | 5 | 34 |
| 1 | 14 | 8 | 12 | 13 | 51 |
| 2 | 4 | 7 | 13 | 8 | 42 |
| 3 | 16 | 6 | 9 | 12 | 62 |
| 4 | 48 | 26 | 19 | 21 | 134 |
| 5 | 67 | 105 | 103 | 101 | 477 |
| | 160 | 160 | 160 | 160 | 800 |

Table II

A comparison between callus, that produced on head of non-grafted stocks R110, after treatment with parafin containing 2.5-dichlorobenzoic acid (2.5-DCB, trade product Rebwachs WFR) and polymeric formulation (P.A.).

| Treatment / Scale | Blank sample | P.A. (5ppm) | Parafin + 2.5-DCB (300 ppm) |
|---|---|---|---|
| 0 | 154 | 75 | 166 |
| 1 | 21 | 34 | 16 |
| 2 | 13 | 20 | 7 |
| 3 | 5 | 20 | 9 |
| 4 | 4 | 26 | 1 |
| 5 | 3 | 25 | 1 |
| | 200 | 200 | 200 |

Table III

Evaluation of callus production of grafted cuttings. (Rootstocks R110, one budded scion sultanina). The callus formation was estimated on the heel of the scions and on the head of the stocks at 27°C for 39 days.

| Treatment / Scale | Blank sample | P.A. (5ppm) | P.A. (5ppm) parafin + 2.5-DCB | P.A. on subject parafin + 2.5-DCB (300 ppm) on scion |
|---|---|---|---|---|
| 0 | 33 | 30 | 48 | 17 |
| 1 | 44 | 70 | 82 | 63 |
| 2 | 38 | 33 | 40 | 25 |
| 3 | 39 | 38 | 19 | 28 |
| 4 | 37 | 22 | 8 | 40 |
| 5 | 9 | 7 | 3 | 27 |
| | 200 | 200 | 200 | 200 |

TABLE IV

The influence of polymeric 2.4-D on the callogenesis of 140Ru, 1103P, R110 and 41B cuttings. The blank differs significantly from other treatments. The treatment with (*) differs from the rest of same variety

| Sample / ppm П.P. | 140 Ru | 1103P | 110R | 41B | Total |
|---|---|---|---|---|---|
| Blank | 84 | 190 | 153 | 184 | 611 |
| 5 | 91 | 206 | 162 | 198 | 617 |
| 10 | 100 | 221* | 161 | 205 | 687 |
| 20 | 110* | 224* | 185* | 218* | 73<br>7 |
| Total | 385 | 841 | 661 | 805 | 2692 |

TABLE V

The comparison of callus obtained on the head of R110 cuttings by using paraffine product (300 ppm 2.5-DCB), by using incubation in water soluble polymeric 2.4-D (Sppm) and also in water (blank). Stratification with turf, 28 days,-28 °C, relative humidity 95 %

| Treatment / Scale | Blank Sample | P.A. 5 ppm | Parafin + 2.5-DCB (300ppm) | Σύνολο |
|---|---|---|---|---|
| 0 | 154 | 75 | 166 | 395 |
| 1 | 21 | 34 | 16 | 71 |
| 2 | 13 | 20 | 7 | 40 |
| 3 | 5 | 20 | 9 | 34 |
| 4 | 4 | 26 | 1 | 31 |
| 5 | 3 | 25 | 1 | 29 |
| Σύνολο | 200 | 200 | 200 | 600 |

REFERENCES


1. Shtilman M.I.(1993) Immobilization on Polymers. Utrecht Tokyo, VSR.
2. Tsatsakis A.M.,Shtilman M.I.(1993) Phytoactive Polymers :New Synthetic Plant Growth Regulators In : Morphogenesis in Plants. Molecular Approaches, Roubelakis-Angelakis K.A., Tran Thanh Van K., eds, Plenum Pub. Co, NY. pp. 255 - 272
3. Allan G.G., Stojanov A., Ueda M (1992) Plant Growth Stimulants In : Intern. Symp. Control. Release Bioact. Mater. Orlando Florida, CRS Inc press, 19 : 178-179.
4. Tsatsakis A.M., Roubelakis-Angelakis K.A.,Shtilman M.I. Shashkova I.B. (1990) Synthesis and Properties of Plant Growth Regulating Polymers In: Chem. and Environment Symp. of Greece and Cyprous, Athens, 2A : 180-184.
5. Shtilman M.I.,Tsatsakis A.M. (1990) Phytoactive Polymers: Methods of Synthesis and Peculiarities of their Properties In : Macromol.Chem. Macromol. Symp. (III EPF Sorrento), Suppl. 48-49.
6. Tsatsakis A.M., Shashkova I.B., Shtilman M.I. (1992) Hydrolysis of Polymeric Esters of 1-Naphthylacetic Acid. Vysokomol Soed (J. Polymer Science 34B(11): 32-36.
7. Shtilman M.I., Kornakov M.Ya., Tsatsakis A.M., Kurushina N.Y., Zalukaeva T.P. (1992) Polymeric Derivatives of 1-Aminocyclopropane- 1 -carboxylic Acid. Ibid 34A(10): 17-22.
8. Georgieva M.P., Georgieva E. (1978) Uber die Copolymerization von Acrylamid mit Vinylestern der 2,4-Dichlorophenoxyessigsaure und 2,4-Dichlorophenoxybuttersaure. Angew. Macromol. Chem. 66: 1- 14.
9. McCormick C.L. Ki Soo Kim. (1988) Controlled activity Polymers VI. Acrylamide Copolymers with Structopendent Naphthylacetic and Indoleacetic Acid Esters. Synthesis and Characterization J.Contr. Release, 7(2):101-108.
10. Korshack V.V., Shtilman M.I., Yaroshenko I.V., Minchenko E.E. (1980) Acylation of Polyvinyl Alcohol by Chloroanhydride of 1-Naphthylacetic Acid. Vysokomol Soed (J. Polymer Science 22A(5): 982-985.
11. Korshack V.V., Shtilman M.I., Voskanjan P.S., Denisova L.A. (1982) The Reaction of Adenine with Polyglycidyl Methacrylate. Ibid 24A (12): 2633-2637.
12. Kefeli V.I., ed., (1966) Methods of Biotesting for Plant Growth Regulators and Herbicides, Nauka Pub., Moscow.


**Claims**

1. New water soluble polymeric derivatives of carboxylic acids of the group of auxins with the following general chemical structure :

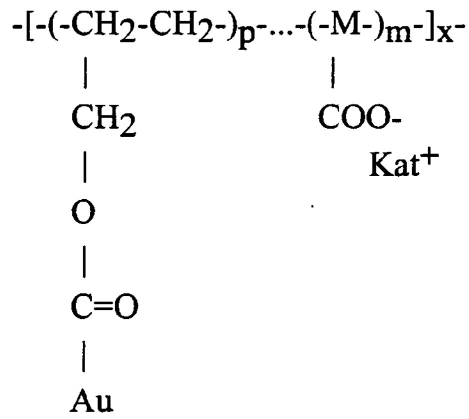

where :

| | |
|---|---|
| Au | = carbonic acid unit (auxin residue, auxin unit) |
| M | = residue of linkage of the unsaturated carbonic acid of the following structure : $-CH_2-CR-$, R = H-, $-CH_3$, $Kat^+ = NH_4^+, K^+, Na^+, Li^+$, |
| n, m | = the numbers of the linkages that are statistically distributed in the main polymeric chain. n = 10 - 25 mol %. m = (100 - n) mol %. |
| x | = degree of copolymerization which corresponds to molecular weights of 40 up to 50 KDalton. The new products with the above structure are suggested as plant growth regulators. |

2. The synthesis of new water soluble polymeric derivatives of carbonic acids auxinic group with general chemical structure as presented in claim 1 achieved by copolymerization of acrylic or methacrylic acids (or other unsaturated derivatives of carbonic acids with modified unsaturated monomers of auxins (allylic esters of auxins).

3. The auxins that are named in claim 1 and 2 are : 3-indolylacetic acid, 3-indolylpropionic acid, 3-indolylbutyric acid, 1-naphthylacetic acid, 2-naphthyloxyacetic acid, 2-naphthylthioacetic acid, 2,4-dichlorophenoxyacetic acid, 4-chlorophenoxyacetic acid, phenoxyacetic acid, 2-methyl-4-chlorophenoxyacetic acid, 2,4,5-trichloropheno- xyacetic acid, 2-(2,4-dichlorophenoxy)propionic acid, 2-(4-chlorophenoxy)propionic acid, 2-(2-methyl-4-chlorophe noxy)propionic acid, 2-(2,4,5-trichlorophenoxy)-propionic acid, 4-(2,4-dichlorophenoxy)butyric acid, 4-(4-chlorophenoxy)butyric acid, 4-(2-methyl-4-chlorophenoxy)butyric acid, 4-(2,4,5-trichlorophenoxy)butyric acid 2,5-dichlorobenzoic acid and other carbonic acids of the auxinic group

4. The polymeric esters of carbonic acids with general chemical structure as presented in claim 1 are characterized by water solubility, optimal molecular weight and high content of bioactive compound (auxin) in the polymer which is achieved due to the use of the allylic esters of carbonic acids of the auxinic group in the copolymerization process. Allylic esters are generally products of stable chemical structure and of easy preparation technology.

5. The conversion of the new copolymers of the acids which are refered in claim 2 to their corresponding ammonium salts or alkalic metal salts hich gives to the final products excellent watersolubility for applications.

6. The use of the new products that are presented in claim 1 as agrochemicals for the treatment of plants, cuttings, rootstocks and seeds e.g. induction of grafting, rooting, callusing, increase of sugar in sugarbeat and other applications either by themselves or in combination with other conventional trade pesticides and stimulants.

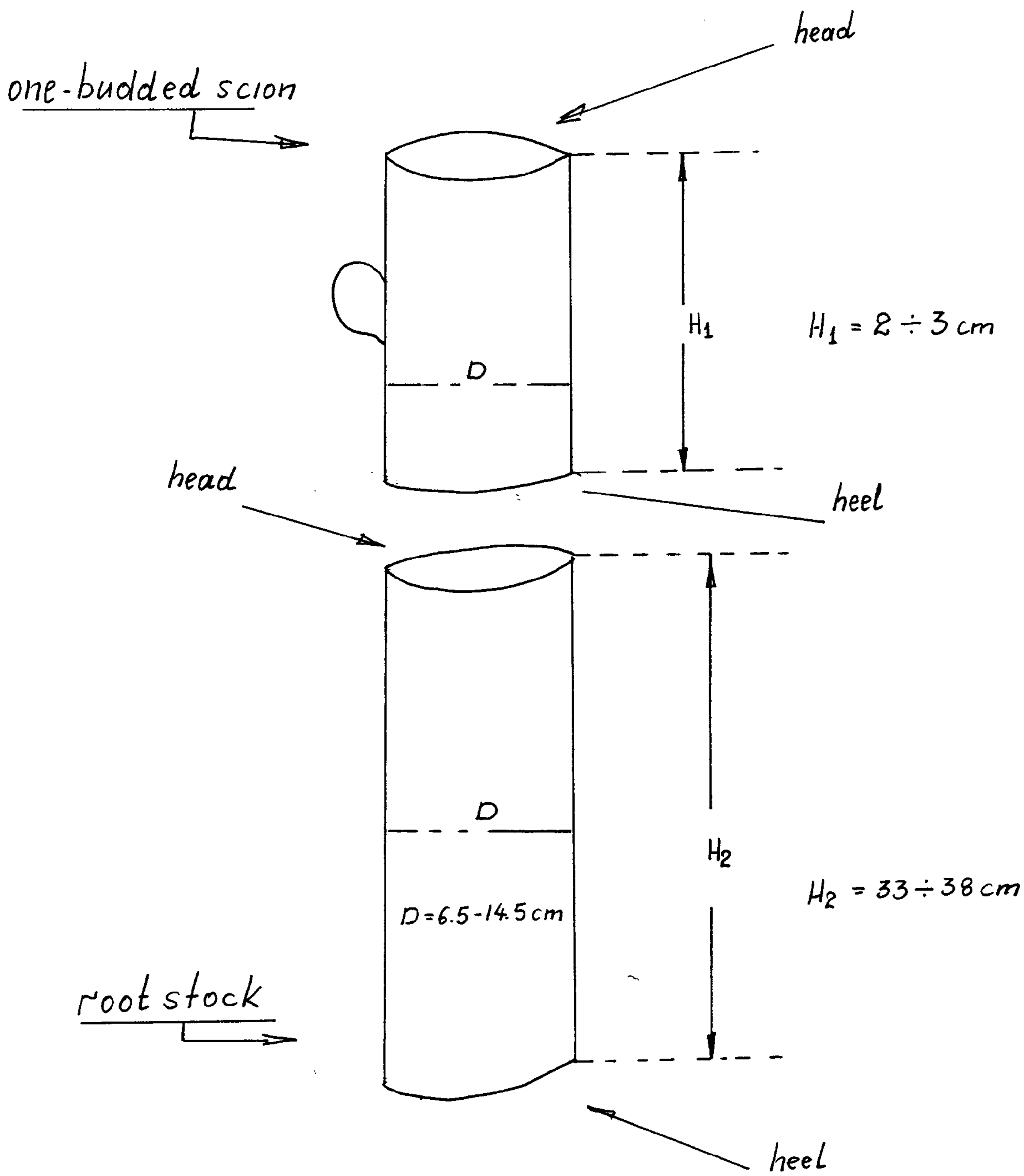
head
one-budded scion
H1
$H_1 = 2 \div 3$ cm
D
head
heel
D
H2
$H_2 = 33 \div 38$ cm
D=6.5-14.5 cm
root stock
heel

Scheme 1

European Patent Office

# EUROPEAN SEARCH REPORT

Application Number
EP 93 60 0016

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int.Cl.5) |
| A | JOURNAL OF MACROMOLECULAR SCIENCE-REVIEWS IN MACROMOLECULAR CHEMISTRY vol. C22, no. 1 , 1982 , NEW YORK US pages 57 - 87 C.L. MCCORMICK ET.AL. 'controlled activity polymers with pendently bound herbicides' * page 72, paragraph 2 * --- | 1-6 | A01N25/10 C08F218/12 |
| A | US-A-4 225 693 (C.L. MCCORMICK) ----- | | |
| | | | TECHNICAL FIELDS SEARCHED (Int.Cl.5) |
| | | | A01N C08F |

The present search report has been drawn up for all claims

| Place of search | Date of completion of the search | Examiner |
|---|---|---|
| THE HAGUE | 10 February 1994 | Decorte, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)